(19) **Europäisches Patentamt / European Patent Office / Office européen des brevets**

(11) **EP 4 546 272 A1**

(12) **EUROPEAN PATENT APPLICATION**
published in accordance with Art. 153(4) EPC

(43) Date of publication:
**30.04.2025 Bulletin 2025/18**

(21) Application number: **23830131.1**

(22) Date of filing: **25.06.2023**

(51) International Patent Classification (IPC):
**G06T 17/20** (2006.01)   **G06T 9/00** (2006.01)

(52) Cooperative Patent Classification (CPC):
**G06T 9/00; G06T 17/20**

(86) International application number:
**PCT/CN2023/102104**

(87) International publication number:
**WO 2024/001953 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 CN 202210772455**

(71) Applicant: **Vivo Mobile Communication Co., Ltd.
Dongguan, Guangdong 523863 (CN)**

(72) Inventors:
• **ZOU, Wenjie
  Dongguan, Guangdong 523863 (CN)**
• **ZHANG, Wei
  Dongguan, Guangdong 523863 (CN)**
• **YANG, Fuzheng
  Dongguan, Guangdong 523863 (CN)**
• **LV, Zhuoyi
  Dongguan, Guangdong 523863 (CN)**

(74) Representative: **Shieldmark
P.O. Box 90471
2509 LL The Hague (NL)**

(54) **LOSSLESS CODING METHOD AND APPARATUS, LOSSLESS DECODING METHOD AND APPARATUS, AND DEVICE**

(57)    This application discloses a lossless encoding method and apparatus, a lossless decoding method and apparatus, and a device, pertaining to the field of encoding and decoding technologies. The lossless decoding method in embodiments of this application includes: traversing, by an encoder side, a target mesh and obtaining geometry coordinates of each vertex in the target mesh; determining, by the encoder side, vertices with same geometry coordinates as duplicate vertices; merging, by the encoder side, the duplicate vertices in the target mesh to obtain a first mesh; and performing, by the encoder side, lossless encoding on the first mesh to generate a target bitstream.

FIG. 1

**Description**

**CROSS-REFERENCE TO RELATED APPLICATIONS**

This application claims priority to Chinese Patent Application No. 202210772455.X filed in China on June 30, 2022, which is incorporated herein by reference in its entirety.

**TECHNICAL FIELD**

This application pertains to the field of encoding and decoding technologies, and specifically relates to a lossless encoding method and apparatus, a lossless decoding method and apparatus, and a device.

**BACKGROUND**

The three-dimensional mesh (Mesh) can be considered as the most popular representation method of three-dimensional models in the past years, and plays an important role in many applications. Because of its simple representation, it is widely integrated into graphics processing units of computers, tablet computers, and smart phones by using hardware algorithms, specially used for rendering three-dimensional meshes.
In the related art, when lossless encoding is performed on a three-dimensional mesh, there may be duplicate vertices in the three-dimensional mesh, which leads to encoding of each duplicate vertex for many times in the encoding process, thus reducing the encoding efficiency.

**SUMMARY**

Embodiments of this application provide a lossless encoding method and apparatus, a lossless decoding method and apparatus, and a device, which can resolve the problem that each duplicate vertex is encoded for many times in existing schemes, thereby reducing the encoding efficiency.
According to a first aspect, a lossless encoding method is provided, including:

traversing, by an encoder side, a target mesh and obtaining geometry coordinates of each vertex in the target mesh;
determining, by the encoder side, vertices with same geometry coordinates as duplicate vertices;
merging, by the encoder side, the duplicate vertices in the target mesh to obtain a first mesh; and
performing, by the encoder side, lossless encoding on the first mesh to generate a target bitstream.

According to a second aspect, a lossless decoding method is provided, including:

performing, by a decoder side, lossless decoding on a target bitstream to obtain a first mesh; and
restoring, by the decoder side, duplicate vertices in the first mesh to obtain a target mesh; where
the duplicate vertices are vertices with same corresponding geometry coordinates in the target mesh.

According to a third aspect, a lossless encoding apparatus is provided, including:

an obtaining module, configured to traverse a target mesh and obtain geometry coordinates of each vertex in the target mesh;
a determining module, configured to determine vertices with same geometry coordinates as duplicate vertices;
a merging module, configured to merge the duplicate vertices in the target mesh to obtain a first mesh; and
an encoding module, configured to perform lossless encoding on the first mesh to generate a target bitstream.

According to a fourth aspect, a lossless decoding apparatus is provided, including:

a decoding module, configured to perform lossless decoding on a target bitstream to obtain a first mesh; and
a restoring module, configured to restore duplicate vertices in the first mesh to obtain a target mesh; where
the duplicate vertices are vertices with same corresponding geometry coordinates in the target mesh.

According to a fifth aspect, a terminal is provided, where the terminal includes a processor and a memory, where a program or instructions capable of running on the processor are stored in the memory. When the program or the instructions are executed by the processor, the steps of the method according to the first aspect or the steps of the method according to the second aspect are implemented.

According to a sixth aspect, a readable storage medium is provided, where a program or instructions are stored in the readable storage medium, and when the program or the instructions are executed by a processor, the steps of the method according to the first aspect are implemented, or the steps of the method according to the second aspect are implemented.

According to a seventh aspect, a chip is provided, where the chip includes a processor and a communication interface, the communication interface is coupled to the processor, and the processor is configured to run a program or instructions to implement the method according to the first aspect or the method according to the second aspect.

According to an eighth aspect, a computer program/program product is provided, where the computer program/program product is stored in a storage medium, and the computer program/program product is executed by at least one processor to implement the steps of the method according to the first aspect are implemented, or the steps of the method according to the second aspect.

According to a ninth aspect, a system is provided, where the system includes an encoder side and a decoder side, where the encoder side performs the steps of the method according to the first aspect and the decoder side performs the steps of the method according to the second aspect.

In the embodiments of this application, the target mesh is traversed to obtain the geometry coordinates of each vertex in the target mesh; the vertices with the same geometry coordinates are determined as duplicate vertices; and the duplicate vertices in the target mesh are merged to obtain the first mesh. In this way, each duplicate vertex is no longer encoded many times in the subsequent lossless encoding process of the first mesh, thus improving the encoding efficiency.

BRIEF DESCRIPTION OF DRAWINGS

FIG. 1 is a schematic flowchart of a lossless encoding method according to an embodiment of this application;
FIG. 2 is a schematic diagram of a manifold mesh according to an embodiment of this application;
FIG. 3 is a schematic diagram of a CornerTable according to an embodiment of this application;
FIG. 4 is a schematic diagram of five operation patterns defined in EB according to an embodiment of this application;
FIG. 5 is a schematic diagram of parallelogram prediction of geometry coordinate according to an embodiment of this application;
FIG. 6 is a schematic diagram of similar triangle prediction of texture coordinates according to an embodiment of this application;
FIG. 7 is a schematic flowchart of a lossless decoding method according to an embodiment of this application;
FIG. 8 is a schematic structural diagram of a lossless encoding apparatus according to an embodiment of this application;
FIG. 9 is a schematic structural diagram of a lossless decoding apparatus according to an embodiment of this application;
FIG. 10 is a structural diagram of a communication device according to an embodiment of this application; and
FIG. 11 is a schematic diagram of a hardware structure of a terminal according to an embodiment of this application.

DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or multiple first objects. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE)/LTE-advanced (LTE-Advanced, LTE-A) system, and may also be used in various wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, such as the 6th generation (6$^{th}$ Generation, 6G) communication system.

The following specifically describes the lossless encoding method provided in the embodiments of this application through specific embodiments and application scenarios thereof with reference to the accompanying drawings.

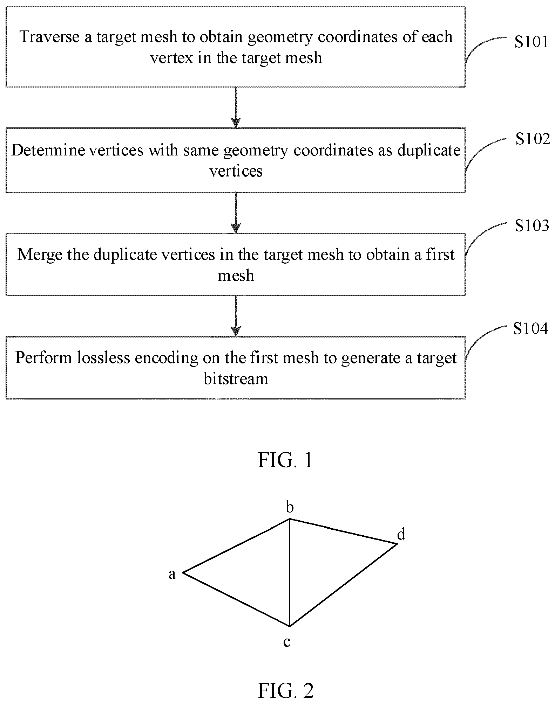

Refer to FIG. 1. FIG. 1 is a flowchart of a lossless encoding method according to an embodiment of this application. The lossless encoding method provided in this embodiment includes the following steps:

S101: Traverse a target mesh to obtain geometry coordinates of each vertex in the target mesh.

S102: Determine vertices with same geometry coordinates as duplicate vertices.

The target mesh is a three-dimensional mesh including duplicate vertices. In the above steps, the target mesh is first traversed, and a correspondence between an index of each geometry vertex in the target mesh and geometry coordinates of the geometry vertex is established. In a case that there are indices of geometry vertices with same geometry coordinates in the above correspondence, vertices corresponding to these indices of geometry vertices are denoted as duplicated vertices.

S103: Merge the duplicate vertices in the target mesh to obtain a first mesh.

In this step, after the duplicate vertices in the target mesh are determined, the duplicate vertices are merged into one vertex to obtain the first mesh. It should be understood that the merging process of duplicate vertices refers to merging multiple vertices with same corresponding geometry coordinates into one vertex. For the specific implementation of merging the duplicate vertices in the target mesh, refer to the subsequent embodiments.

In an optional implementation, part of duplicate vertices in the target mesh may be merged to obtain the first mesh. In another optional implementation, all the duplicate vertices in the target mesh are merged to obtain the first mesh that does not include the duplicate vertices.

S104: Perform lossless encoding on the first mesh to generate a target bitstream.

In this step, after the first mesh is obtained, based on whether the first mesh is a three-dimensional mesh including a non-manifold structure, different lossless encoding methods are selected to perform lossless encoding on the first mesh to generate the target bitstream.

In this embodiment of this application, the target mesh is traversed to obtain the geometry coordinates of each vertex in the target mesh; the vertices with the same geometry coordinates are determined as duplicate vertices; and the first mesh is obtained, ensuring that the first mesh does not include duplicate vertices. In this way, each duplicate vertex is no longer encoded many times in the subsequent lossless encoding process of the first mesh, thus improving the encoding efficiency.

Optionally, the merging the duplicate vertices in the target mesh to obtain a first mesh includes:

in a case that geometry coordinates of each vertex in the target mesh are in one-to-one correspondence to texture coordinates, merge the duplicate vertices with the same geometry coordinates in the target mesh into one vertex without changing the texture coordinates of the duplicate vertices to obtain the first mesh.

In this embodiment, in a case that the geometry coordinates of each vertex in the target mesh are in one-to-one correspondence to texture coordinates, the duplicate vertices with the same geometry coordinates in the target mesh are merged into one vertex, without changing the texture coordinates of the duplicate vertices, that is, the texture coordinates of the duplicate vertices are retained. Further, at the decoder side, the duplicate vertices are restored based on the retained texture coordinates of the duplicate vertices.

Optionally, the merging the duplicate vertices in the target mesh to obtain a first mesh includes:

merging the duplicate vertices with the same geometry coordinates in the target mesh into one vertex to obtain the first mesh; and

encoding a first identifier corresponding to each vertex in the first mesh to generate an identifier bitstream, where the first identifier indicates the number of duplicates of the corresponding vertex.

In this embodiment, after the duplicate vertices are merged into one vertex, each vertex is given a first identifier based on the number of duplicates of each vertex, and the first identifier corresponding to each vertex is encoded to generate an identifier bitstream.

Optionally, the performing lossless encoding on the first mesh to generate the target bitstream includes:

splitting the first mesh into a second mesh in a case that the first mesh is a three-dimensional mesh including a non-manifold structure;

encoding mesh information corresponding to the second mesh and vertex information of a first vertex separately to obtain a first bitstream corresponding to the mesh information and a second bitstream corresponding to the vertex information of the first vertex; and

generating a target bitstream based on the first bitstream and the second bitstream.

The first mesh is a three-dimensional mesh including a non-manifold structure, and the second mesh is a three-dimensional mesh including a manifold structure. In this step, the process of splitting the first mesh into the second mesh can be divided into two parts: splitting non-manifold edges and splitting non-manifold vertices.

1. Splitting non-manifold edges

The first step of splitting a non-manifold edge is to find a non-manifold edge.

It should be understood that one edge in the non-manifold edges is present in at least three triangles. In an optional implementation, one data structure is established, such as a mapping table or a hash table. This data structure is used to store triangles in which each edge in the first mesh is located, and non-manifold edges are determined by querying the number of triangles in which each edge is located.

In another optional implementation, a CornerTable is created to establish a correspondence between each edge and an opposite corner, and an edge corresponding to at least three opposite corners is determined as a non-manifold edge.

To understand the correspondence between edges and opposite corners, refer to FIG. 2. As shown in FIG. 2, corner a is opposite to edge bc, and corner b is also opposite to edge bc, and opposite corners of edge bc are corner a and corner d.

The second step of splitting non-manifold edges is to add vertices and modify a connectivity corresponding to the first mesh.

After the non-manifold edge is found, duplicate vertices are created for two vertices of the non-manifold edge, and one triangle t where the non-manifold edge is located is selected, so that the 3rd vertex in the triangle other than the above two vertices and the created duplicate vertices form a new triangle t', and an original triangle t is replaced by the new triangle t'. The above operations are performed on all non-manifold edges to convert non-manifold edges into manifold edges. In addition, indices of the duplicate vertices created in this process are recorded.

2. Splitting non-manifold vertices

The first step of splitting non-manifold vertices is to find non-manifold vertices.

Starting from a specific corner corresponding to any one vertex in the first mesh, all corners adjacent to the corner and forming one sector are traversed in turn, and the vertex and the traversed corners are marked as traversed. After all vertices in the first mesh have been traversed, vertices corresponding to corners that are marked as not traversed are determined as non-manifold vertices.

The second step of splitting non-manifold vertices is to split the non-manifold vertices.

For each non-manifold vertex, one duplicate vertex is created, and the corners not traversed in the first step are connected to the created duplicate vertex based on the connectivity corresponding to the first mesh, so as to split the non-manifold vertex into two manifold vertices. This process is repeated until all the vertices are transformed into manifold vertices.

After the second mesh is obtained, the mesh information corresponding to the second mesh is encoded to obtain the first bitstream, where the mesh information includes but is not limited to a connectivity, geometry information, and attribute information. Vertex information of the first vertex is encoded to obtain a second bitstream. The first vertex is a vertex newly added to the second mesh relative to the first mesh, where the first vertex includes a vertex newly added after splitting of the geometry coordinates of each vertex of the first mesh and a vertex newly added after splitting of the texture coordinates of each vertex of the first mesh.

For a specific implementation of how to obtain the first bitstream and the second bitstream, refer to the subsequent embodiments.

After the first bitstream and the second bitstream are obtained, the first bitstream and the second bitstream are mixed to generate the target bitstream.

Optionally, the splitting the first mesh into a second mesh includes:

splitting a non-manifold structure indicated by a second identifier in the first mesh to obtain the second mesh; where

It should be understood that if a non-manifold structure is generated by merging duplicate vertices, the newly generated non-manifold structure needs to be marked, so that the encoder side can perform lossless encoding.

In this embodiment, in the process of merging duplicate vertices, a second identifier is given to the non-manifold structure generated by merging duplicate vertices. It should be understood that the second identifier is used to indicate a non-manifold vertex or a non-manifold edge. In the process of splitting the first mesh into the second mesh, the non-manifold structure indicated by the second identifier is split to obtain the second mesh.

Optionally, in the process of merging duplicate vertices, if merging a group of duplicate vertices may produce a non-manifold structure, the group of duplicate vertices may not be merged.

Optionally, the encoding vertex information of a first vertex to obtain a second bitstream corresponding to the vertex information of the first vertex includes:

generating a target identifier based on the non-manifold structure included in the first mesh;
performing entropy encoding on an index corresponding to the first vertex to obtain a first sub-bitstream; and
generating the second bitstream based on the target identifier and the first sub-bitstream.

The target identifier is used to indicate whether the first mesh includes a non-manifold structure. In this embodiment, the target identifier is generated in a case that the first mesh includes a non-manifold structure.

Optionally, one identifier is set, and the identifier is associated with whether the first mesh includes a non-manifold structure. If the first mesh includes a non-manifold structure, that is, the number of first vertices is greater than 0, the identifier is set to 1, and the above identifier can be understood as a target identifier. When the first mesh includes only a manifold structure, that is, the number of first vertices is equal to 0, the identifier is set to 0.

The vertex information of the first vertex includes an index corresponding to the first vertex in the first mesh. Optionally, one preset threshold is set, and if the number of first vertices is less than or equal to the preset threshold, it indicates that the number of first vertices is relatively small; in this case, the index corresponding to the first vertex may be entropy encoded to obtain the first sub-bitstream, so as to reduce a bitrate of the first sub-bitstream. Further, the target identifier and the first sub-bitstream are merged to generate a second bitstream.

Optionally, the encoding vertex information of a first vertex to obtain a second bitstream corresponding to the vertex information of the first vertex includes:

generating a target identifier based on the non-manifold structure included in the first mesh;
performing entropy encoding on a flag bit corresponding to each vertex in the second mesh to obtain a second sub-bitstream; and
generating the second bitstream according to the target identifier and the second sub-bitstream.

The target identifier is used to indicate whether the first mesh includes a non-manifold structure. In this embodiment, the target identifier is generated in a case that the first mesh includes a non-manifold structure.

The vertex information of the first vertex may alternatively be a flag bit corresponding to each vertex, and the flag bit is used to indicate whether the corresponding vertex is the first vertex. For example, if a vertex is a first vertex added by splitting the first mesh, a flag bit corresponding to the vertex is 1; or if a vertex is not a first vertex added by splitting the first mesh, a flag bit corresponding to the vertex is 0. In this embodiment, optionally, one preset threshold is set, and if the number of first vertices is greater than the preset threshold, it indicates that the number of first vertices is relatively large, the flag bit corresponding to each vertex are entropy encoded to obtain the second sub-bitstream. Further, the target identifier and the second sub-bitstream are merged to generate a second bitstream.

It should be understood that the second bitstream can be stored in various manners in the target bitstream. An optional implementation is to use the second bitstream as a separate sub-bitstream. Another optional implementation is to store a bitstream corresponding to a newly added attribute vertex into a sub-bitstream corresponding to the attribute information, and store a bitstream corresponding to a newly added geometry vertex into a sub-bitstream corresponding to the geometry information. Another optional implementation is to use the bitstream corresponding to the newly added attribute vertex and the bitstream corresponding to the newly added geometry vertex as separate two sub-bitstreams.

Optionally, the encoding mesh information corresponding to the second mesh to obtain a first bitstream corresponding to the mesh information includes:

encoding a connectivity corresponding to the second mesh to generate the third sub-bitstream;
encoding geometry information corresponding to the second mesh to generate the fourth sub-bitstream; and
encoding attribute information corresponding to the second mesh to generate the fifth sub-bitstream.

As mentioned above, the mesh information includes the connectivity, the geometry information, and the attribute information, and the first bitstream in this embodiment includes the third sub-bitstream corresponding to the connectivity, the fourth sub-bitstream corresponding to the geometry information, and the fifth sub-bitstream corresponding to the attribute information.

In this embodiment, the connectivity corresponding to the second mesh is encoded to generate the third sub-bitstream; geometric encoding is performed on the geometry information corresponding to the second mesh to generate the fourth sub-bitstream; and attribute encoding is performed on the attribute information corresponding to the second mesh to generate the fifth sub-bitstream. For a specific implementation of how to generate the third sub-bitstream, the fourth sub-bitstream, and the fifth sub-bitstream, refer to the subsequent embodiments.

The following describes in detail how to encode the connectivity corresponding to the second mesh.

Optionally, the encoding a connectivity corresponding to the second mesh to generate the third sub-bitstream includes:

traversing each mesh in the second mesh to generate a target character string; and

performing entropy encoding on the target character string to generate the third sub-bitstream.

In this embodiment, a compression encoding technology can be used to encode the connectivity of the second mesh, where the compression encoding technology may be the Edgebreaker (EB) algorithm.

The specific implementation is as follows: each corner of each triangular face in the second mesh is numbered in counterclockwise order to obtain an index of each corner. If the second mesh includes f triangular faces, the second mesh includes 3f corners.

Optionally, a serial number of a triangle where a current corner is located can be calculated by Formula 1.

$$\text{Formula } 1{:}f_i = c/3$$

where c is an index of the current corner, and $f_i$ is a serial number of the triangle where the current corner is located.

Optionally, an index of a previous corner of the current corner can be calculated by Formula 2.

$$\text{Formula } 2{:}c_p = (f_i * 3) + (c - 1)\%3$$

where c is the index of the current corner, $f_i$ is the serial number of the triangle where the current corner is located, $c_p$ is an index of the previous corner of the current corner, and the % symbol represents a modulo operation.

Optionally, an index of a next corner of the current corner can be calculated by Formula 3.

$$\text{Formula } 3{:}c_p = (f_i * 3) + (c + 1)\%3$$

where c is the index of the current corner, $f_i$ is the serial number of the triangle where the current corner is located, $c_p$ is an index of the next corner of the current corner, and the % symbol represents a modulo operation.

After each corner is numbered and the serial number of each triangle is determined, a CornerTable can be created, where the CornerTable includes a V table, an O table, a U table, and an M table. The V table stores an index of a vertex corresponding to each corner, the O table stores an index of an opposite corner corresponding to each corner, the U table stores an identifier indicating whether each triangle has been traversed, and the M table stores an identifier indicating whether each vertex has been traversed.

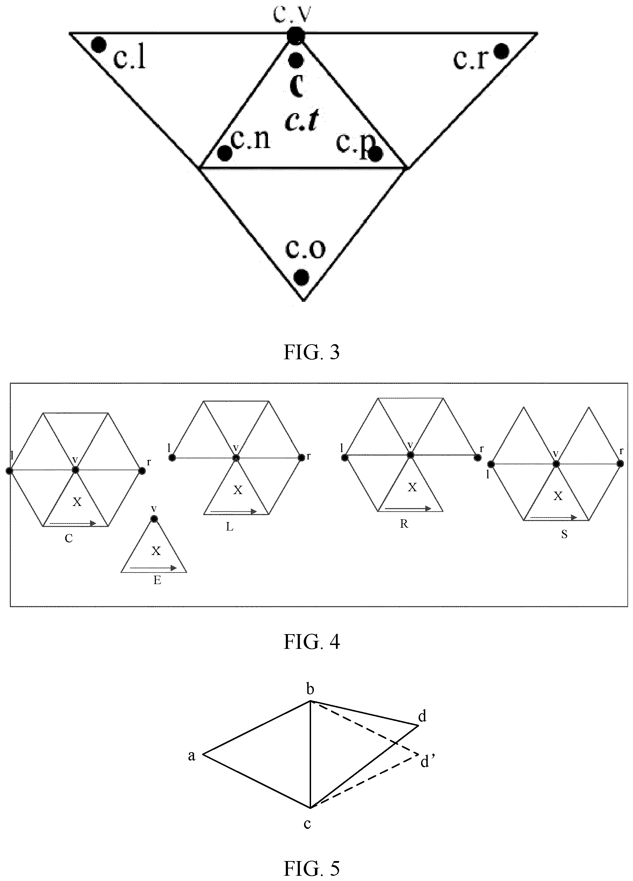

To understand usage of the CornerTable, refer to FIG. 3. In FIG. 3, c represents the current corner, c.p represents a previous corner of the current corner c, and c.n represents a next corner of the current corner c. c.o is an opposite corner of the current corner c, and can be obtained by querying the O table. c.t is a serial number of the triangle where c is located, and can be calculated based on Formula 1. c.v represents a vertex of the current corner, and can be obtained by querying the V table. c.l represents a corner to the left of the current corner c, and can be obtained by querying an opposite corner of c.p in the O table. c.r represents the corner to the right of the current corner c, and can be obtained by querying an opposite corner of c.n in the O table.

After the CornerTable is created, an initial triangle can be randomly selected in the second mesh, and triangles in the second mesh can be traversed based on five operation patterns defined in EB, and a target character string can be generated, where the target character string is a CLERS pattern character string. When a traversal path terminates and there are still triangles not yet traversed in the second mesh, an untraversed triangle is randomly selected for next round of traversing until all triangles in the mesh are traversed. Further, a CLERS pattern character string is compressed through entropy encoding to generate a third sub-bitstream.

For ease of understanding on the five operation patterns defined in EB, refer to FIG. 4.

The current traversed corner is x. If a vertex v corresponding to x has not been traversed, the current triangle is determined to be pattern C, and a next triangle to be traversed is determined to be the triangle where r is located. If the vertex v corresponding to x has not been traversed, and the triangle where l is located has been traversed, the current triangle is determined to be pattern L, and the next triangle to be traversed is determined to be the triangle where r is located. If the vertex v corresponding to x has not been traversed, and the triangle where r is located has been traversed, the current triangle is determined to be pattern R, and the next triangle to be traversed is determined to be the triangle where l is located.

If the vertex v corresponding to x has been traversed, and neither the triangle in which l is located nor the triangle in which r is located has been traversed, the current triangle is determined to be pattern S. In pattern S, the traversal path has two branches. The triangle in which r is located is first traversed and the triangle in which l is located is stored into a stack, and after traversal of the triangle in which r is located is complete, the triangle in which l is located is then traversed. If the vertex v corresponding to x has been traversed, and both the triangle in which l is located and the triangle in which r is located have been traversed, the current triangle is determined to be pattern E, and in this case, the traversal has reached an end point of the current traversal path branch.

The following describes in detail how to encode the geometry information corresponding to the second mesh.

Optionally, the encoding geometry information corresponding to the second mesh to generate the fourth sub-bitstream includes:

> for each vertex in the second mesh, obtaining predicted geometry coordinates corresponding to each vertex by performing geometric prediction encoding;
> obtaining a geometric prediction residual corresponding to each vertex based on predicted geometry coordinates corresponding to each vertex and real geometry coordinates corresponding to each vertex; and
> performing entropy encoding on the geometric prediction residual corresponding to each vertex to generate the fourth sub-bitstream.

In this embodiment, a parallelogram predictive encoding algorithm is used to perform geometric encoding on the second mesh. It should be understood that in other implementations, geometric encoding may alternatively be performed by using a difference predictive encoding algorithm, a multi-parallelogram predictive encoding algorithm, or in other manners, which is not specifically limited here.

For ease of understanding, refer to FIG. 5. As shown in FIG. 5, the second mesh includes four vertices a, b, c, and d, and the four vertices form two triangles shown in FIG. 5.

Geometry information of vertex a, vertex b, and vertex c has been encoded, and geometry information of vertex d is to be encoded. In this case, predicted geometry coordinates corresponding to vertex d can be calculated by Formula 4.

$$\text{Formula } 4 : d'(x, y, z) = b(x, y, z) + c(x, y, z) - a(x, y, z)$$

where d'(x, y, z) is predicted geometry coordinates corresponding to vertex d, a(x, y, z) is real geometry coordinates corresponding to vertex a, b (x, y, z) is real geometry coordinates corresponding to vertex b, and c(x, y, z) is real geometry coordinates corresponding to vertex c.

Further, encoding is performed on the geometry information of vertex d. Based on obtained real geometry coordinates of vertex d, a geometric prediction residual corresponding to vertex d is calculated by Formula 5.

$$\text{Formula } 5 : \Delta d(x, y, z) = d(x, y, z) - d'(x, y, z)$$

where $\Delta d(x, y, z)$ is the geometric prediction residual corresponding to vertex d, d'(x, y, z) is the predicted geometry coordinates corresponding to vertex d, and d(x, y, z) is the real geometry coordinates corresponding to vertex d.

In this way, after the geometric prediction residual corresponding to each vertex is obtained, the geometric prediction residual corresponding to each vertex is entropy encoded to generate the fourth sub-bitstream.

The following describes in detail how to encode the attribute information corresponding to the second mesh:

Optionally, the encoding attribute information corresponding to the second mesh to generate the fifth sub-bitstream includes:

> performing entropy encoding on the attribute prediction residual corresponding to each vertex in the second mesh to generate the first target sub-bitstream, where the attribute prediction residual corresponding to each vertex is determined through attribute prediction encoding on each vertex; and
> encoding the texture map of the second mesh to generate a second target sub-bitstream.

In this embodiment, the attribute information includes texture coordinates and a texture map, and the fifth sub-bitstream includes a first target sub-bitstream corresponding to the texture coordinates and a second target sub-bitstream corresponding to the texture map. In this embodiment, based on the attribute prediction encoding on each vertex in the second mesh, the attribute prediction residual corresponding to each vertex is determined, and the attribute prediction residual corresponding to each vertex is entropy encoded to generate the first target sub-bitstream. For a specific implementation of how to generate the first target sub-bitstream, refer to the subsequent embodiments.

In this embodiment, the texture map of the second mesh is encoded to generate a second target sub-bitstream.

Optionally, the first target sub-bitstream and the second target sub-bitstream are mixed to obtain a fifth sub-bitstream.

One possible case is that the attribute information does not include the texture map. In this case, the fifth sub-bitstream can be generated only by entropy encoding an attribute prediction residual corresponding to each vertex.

Optionally, the encoding attribute information corresponding to the second mesh to generate the first target sub-bitstream includes:

for each vertex in the second mesh, obtaining predicted texture coordinates corresponding to each vertex by performing attribute prediction encoding;

obtaining an attribute prediction residual corresponding to each vertex based on predicted texture coordinates corresponding to each vertex and real texture coordinates corresponding to each vertex; and

performing entropy encoding on the attribute prediction residual corresponding to each vertex to generate the first target sub-bitstream.

The following describes in detail how to perform attribute prediction encoding on each vertex:

An initial edge set is first obtained. Specifically, the initial edge set is obtained as follows:

Based on the reconstructed geometry information and connectivity, one initial triangle is selected, texture coordinates of three vertices of the initial triangle are encoded, and three edges of the initial triangle are stored into an edge set.

It should be noted that for the initial triangle, prediction is not performed on the vertices, but texture coordinates are directly encoded. After texture coordinates of each vertex of the initial triangle are encoded, each edge of the initial triangle is stored into the edge set to obtain the initial edge set, and then prediction is performed on subsequent vertices based on the initial edge set.

Real texture coordinates of a to-be-encoded vertex and a residual of predicted texture coordinates of a opposite vertex of the target triangle are encoded.

It should be noted that after the predicted texture coordinates of the to-be-encoded vertex are obtained, the residual of the to-be-encoded vertex can be obtained based on the predicted texture coordinates and the real texture coordinates, and encoding on the to-be-encoded vertex can be implemented by encoding the residual, so that the number of bits in encoding of the texture coordinates can be reduced.

It should be noted that the residual may be a difference between the real texture coordinates of the to-be-encoded vertex and the predicted texture coordinates of the opposite vertex of the target triangle, and can be obtained by subtracting the predicted texture coordinate of the opposite vertex of the target triangle from the real texture coordinates of the to-be-encoded vertex, or by subtracting the real texture coordinates of the to-be-encoded vertex from the predicted texture coordinate of the opposite vertex of the target triangle.

Optionally, in an embodiment of this application, an implementation of obtaining the predicted texture coordinates of the opposite vertex of the target triangle corresponding to the first edge may be as follows:

based on the geometry coordinates of each vertex of the target triangle, the encoder side obtains texture coordinates of a projection vertex of the opposite vertex on the first edge.

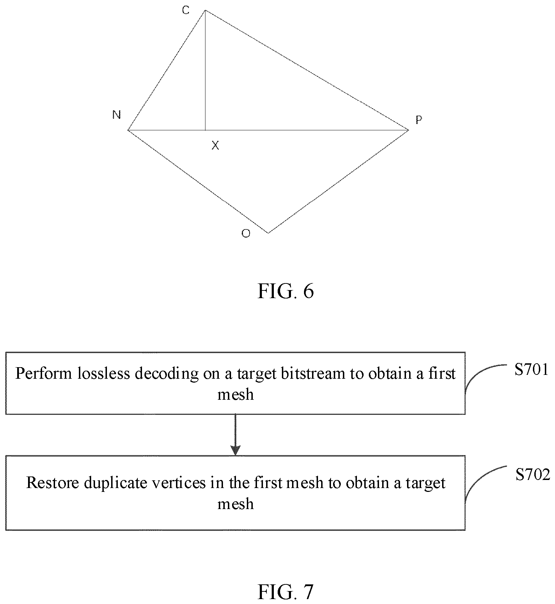

It should be noted that, as shown in FIG. 6, the edge NP is one edge selected from the edge set, and may be considered as the first edge. Vertex N and vertex P are two vertices of the first edge, vertex C is a to-be-encoded vertex, vertex N, vertex P, and vertex C form the target triangle, vertex X is a projection of vertex C on the edge NP, vertex O is an encoded vertex, and a triangle formed by vertex O, vertex N, and vertex P shares the edge NP with the triangle formed by vertex N, vertex P, and vertex C. Based on the FIG. 6, optionally, a specific manner of obtaining the texture coordinates of the projection vertex of the opposite vertex on the first edge mentioned in this embodiment of this application is as follows:

According to Formula 6: $X_{uv} = \overrightarrow{NX}_{uv} + N_{uv}$, the texture coordinates of the projection vertex of the opposite vertex on the first edge are obtained;

where $X_{uv}$ is the texture coordinates of the projection vertex of the opposite vertex on the first edge; $N_{uv}$ is texture coordinates of the vertex N on the first edge of the target triangle; $\overrightarrow{NX}_{uv}$ is a vector of texture coordinates from vertex N on the first edge of the target triangle to the projection vertex X of the opposite vertex on the first edge; and $\overrightarrow{NX}_{uv} = (\overrightarrow{NP}_G \cdot \overrightarrow{NC}_G) * \overrightarrow{NP}_{uv} / \overrightarrow{NP}_G^2$, where $\overrightarrow{NP}_G$ is a vector of geometry coordinates of vertex N and vertex P on the first edge, $\overrightarrow{NC}_G$ is a vector of geometry coordinates from vertex N on the first edge to and the projection vertex of the opposite vertex, and $\overrightarrow{NP}_{uv}$ is a vector of texture coordinates from vertex N to vertex P on the first edge.

The encoder side obtains predicted texture coordinates of the opposite vertex based on the texture coordinates of the projection vertex.

$$\mathrm{Pred}_C = \begin{cases} X_{uv} + \overrightarrow{XC}_{uv}, & |\overrightarrow{CO1}_{uv}| > |\overrightarrow{CO2}_{uv}| \\ X_{uv} - \overrightarrow{XC}_{uv}, & |\overrightarrow{CO1}_{uv}| < |\overrightarrow{CO2}_{uv}| \end{cases}$$

According to Formula 7:                                                                                                            , the texture coordinates of the opposite vertex are obtained;

where $\mathrm{Pred}_C$ is the predicted texture coordinates of the opposite vertex, and $\overrightarrow{CO1}_{uv} = O_{uv} - (X_{uv} + \overrightarrow{XC}_{uv})$, where $\overrightarrow{CO1}_{uv}$ is a first vector value of the vector of the texture coordinates of the opposite vertex and the first vertex O corresponding to the first edge, $O_{uv}$ is the texture coordinates of the first vertex corresponding to the first edge of the target triangle, the first vertex O is an opposite vertex of the first edge of the first triangle, and the first triangle shares the first edge with the target triangle. $\overrightarrow{XC}_{uv}$ is vector texture coordinates from the projection vertex X of the opposite vertex on the first edge to the opposite vertex. $\overrightarrow{CO2}_{uv} = O_{uv} - (X_{uv} - \overrightarrow{XC}_{uv})$, where $\overrightarrow{CO2}_{uv}$ is a second vector value of the vector of the texture coordinates of the opposite vertex and the first vertex O corresponding to the first edge.

It should be noted that based on the above process, predicted texture coordinates of a to-be-encoded vertex are obtained, and the to-be-encoded vertex can be encoded based on the predicted texture coordinates. Optionally, after encoding the to-be-encoded vertex based on one edge in the edge set, the encoder side stores a second edge in the target triangle into the edge set and deletes the first edge from the edge set, and the second edge is an edge in the target triangle that is not included in the edge set, so as to update the edge set.

It should be noted that in this embodiment of this application, encoding can be performed during obtaining of the residual of the to-be-encoded vertex, or all residuals can be obtained first and then the residuals are uniformly encoded.

To sum up, a specific implementation process of encoding texture coordinates (hereinafter referred to as UV coordinates) in this embodiment of this application is as follows:

Step S1: Select one initial triangle from a reconstructed connectivity and directly encode UV coordinates of three vertices of the initial triangle without prediction, and then store edges of the initial triangle into an edge set.

Step S2: Select an edge $\tau$ from the edge set according to an access criteria, encode UV coordinates of an opposite vertex of a new triangle formed by the edge $\tau$, calculate predicted UV coordinates of a to-be-encoded vertex in the foregoing manner by using a projection relation of the triangle from three dimensions to two dimensions, and subtract the predicted UV coordinates from an original value (that is, real UV coordinates) of the UV coordinates of the to-be-encoded vertex to obtain a residual.

Step S3: Add two edges of the new triangle into the edge set, and remove the edge $\tau$ at the top of the edge set; and select a next edge from the edge set, continue to encode predicted UV coordinates of an opposite vertex of a triangle adjacent to this edge, obtain a residual, return to step S3, and perform step S3 circularly until residuals of all vertices are obtained.

Step S4: Perform entropy encoding on a UV coordinate residual and output a UV coordinate bitstream.

Optionally, the performing lossless encoding on the first mesh to generate the target bitstream includes:

in a case that the first mesh is a three-dimensional mesh including a manifold structure, encoding a connectivity corresponding to the first mesh to generate a third bitstream;
encoding geometry information corresponding to the first mesh to generate a fourth bitstream;
encoding attribute information corresponding to the first mesh to generate a fifth bitstream; and
generating the target bitstream based on the third bitstream, the fourth bitstream, and the fifth bitstream.

In this embodiment, when the first mesh is a three-dimensional mesh including a manifold structure, it indicates that there is no need to split the first mesh. In this case, the connectivity corresponding to the first mesh can be directly encoded to generate the third bitstream; the geometry information corresponding to the first mesh is encoded to generate the fourth bitstream; the attribute information corresponding to the first mesh is encoded to generate the fifth bitstream; where the third bitstream, the fourth bitstream, and the fifth bitstream are mixed to generate the target bitstream.

Refer to FIG. 7. FIG. 7 is a flowchart of a lossless decoding method according to an embodiment of this application. The lossless decoding method provided in this embodiment includes the following steps:

S701: Perform lossless decoding on a target bitstream to obtain a first mesh.

In this step, the decoder side performs lossless decoding on a target bitstream to obtain the first mesh. For a specific lossless decoding manner, refer to the subsequent embodiments.

S702: Restore duplicate vertices in the first mesh to obtain a target mesh.

It should be noted that the above duplicate vertices are vertices with same corresponding geometry coordinates in a target mesh. After the first mesh is obtained, the duplicate vertices in the first mesh are restored to obtain the target mesh. For a specific implementation of restoring the duplicate vertices, refer to the subsequent embodiments.

Optionally, the restoring duplicate vertices in the first mesh to obtain a target mesh includes:

traversing the first mesh in a case that attribute information of the first mesh is decoded, and determining geometry vertices corresponding to multiple texture coordinate vertices as target vertices; and
creating duplicate vertices with same geometry coordinates as the target vertex, and updating a connectivity corresponding to the first mesh based on a connectivity corresponding to texture coordinates of the duplicate vertices to obtain the target mesh.

In this embodiment, texture coordinates of each vertex in the first mesh can be obtained in a case that the attribute information of the first mesh is decoded. In this case, the decoder side traverses the first mesh to determine a correspondence between texture coordinate vertices and geometry vertices, and if there are geometry vertices corresponding to the plurality of texture coordinate vertices, determines the geometry vertices as target vertices.

The duplicate vertices with the same geometry coordinates as the target vertices are created, and the connectivity corresponding to the first mesh is updated based on the connectivity corresponding to the texture coordinates of the duplicate vertices, so that the geometry vertices correspond to the texture coordinate vertices one by one, to obtain the target mesh.

Optionally, the restoring duplicate vertices in the first mesh to obtain a target mesh includes:

decoding the identifier bitstream to obtain a first identifier corresponding to each vertex in the first mesh; and
creating duplicate vertices based on the first identifier corresponding to each vertex, to obtain the target mesh.

In this embodiment, in a case that the target bitstream includes an identifier bitstream, the identifier bitstream is decoded to obtain the first identifier corresponding to each vertex in the first mesh, where the first identifier is used to indicate the number of duplicates of the corresponding vertex. Further, duplicate vertices corresponding to the vertex are created based on the first identifier corresponding to each vertex, to obtain the target mesh.

For example, if a first identifier corresponding to a vertex indicates that the number of duplicates of the vertex is 0, duplicate vertices corresponding to the vertex is not created; or if the first identifier corresponding to the vertex indicates that the repetition count of the vertex is 1, a vertex with same geometry coordinates as the vertex is created.

Optionally, the performing lossless decoding on a target bitstream to obtain a first mesh includes:

demultiplexing the target bitstream to obtain a sixth bitstream and a seventh bitstream;
decoding the sixth bitstream and the seventh bitstream to obtain mesh information corresponding to the sixth bitstream and vertex information of second vertices corresponding to the seventh bitstream, respectively;
reconstructing a second mesh based on the mesh information; and
merging second vertices in the second mesh based on vertex information of the second vertices, to obtain a first mesh.

After obtaining the target bitstream, the decoder side demultiplexes the target bitstream to obtain a sixth bitstream and a seventh bitstream, decodes the sixth bitstream to obtain mesh information, and decodes the seventh bitstream to obtain vertex information of the second vertex. The second vertex is obtained by splitting the first mesh into a second mesh, and the second vertex is a vertex newly added to the second mesh relative to the first mesh, where the second vertex includes a vertex newly added after splitting of the geometry coordinates of each vertex of the first mesh and a vertex newly added after splitting of the texture coordinates of each vertex of the first mesh.

As mentioned above, the mesh information includes a connectivity, geometry information, and attribute information. The second mesh can be directly reconstructed by using the connectivity, geometry information, and attribute information of the second mesh.

Optionally, the decoding the seventh bitstream to obtain vertex information of second vertices corresponding to the seventh bitstream includes:
decoding the sixth sub-bitstream to obtain the vertex information of the second vertices, in a case that the target identifier indicates that the first mesh is a three-dimensional mesh including a non-manifold structure.

It should be understood that the seventh bitstream includes a target identifier and a sixth sub-bitstream, and in a case that the target identifier indicates that the first mesh is a three-dimensional mesh including a non-manifold structure, the sixth sub-bitstream is decoded to obtain the vertex information of the second vertices.

Optionally, if the target identifier is 1, it indicates that the first mesh is a three-dimensional mesh including a non-manifold structure. In this case, the sixth sub-bitstream is decoded. If the target identifier is 0, it indicates that the first mesh is a three-dimensional mesh including only manifold structure, the sixth sub-bitstream does not need to be decoded.

Optionally, the merging second vertices in the second mesh based on vertex information of the second vertices, to obtain a first mesh includes:

parsing the vertex information of the second vertices and determining the second vertices in the second mesh;

querying geometry coordinates of the second vertex in a mapping table to obtain a target vertex;

updating an index corresponding to the second vertex to an index corresponding to the target vertex; and

updating a connectivity corresponding to the second mesh based on the index corresponding to each vertex in the second mesh to obtain the first mesh.

In this embodiment that the vertex information of the second vertex is first parsed to determine the second vertex, where the second vertex can be understood as a newly added vertex obtained by splitting the first mesh into the second mesh. It should be understood that a vertex in the second mesh other than the second vertex can be called a non-newly added vertex.

It should be understood that after the sixth bitstream and the seventh bitstream are decoded, a mapping table can be obtained based on the decoding result, where the mapping table stores a mapping relationship between the geometry coordinates corresponding to each vertex and the index corresponding to each vertex. Optionally, the mapping table may be a hash table.

If the current vertex is a newly added second vertex, querying is performed for geometry coordinates of the second vertex in the mapping table to obtain a target vertex, where geometry coordinates corresponding to the target vertex are the same as geometry coordinates corresponding to the second vertex; and an index corresponding to the second vertex is updated to an index corresponding to the target vertex. If multiple vertices with the same geometry coordinates as the second vertex are found by querying the mapping table, one vertex can be randomly determined as the target vertex from the plurality of vertices. In this embodiment, merging the second vertex is implemented by updating the index of the second vertex.

If the current vertex is not a newly added second vertex, the index corresponding to the current vertex is not updated.

Further, after traversal of each vertex in the second mesh, the connectivity corresponding to the second mesh is updated, and the geometry information list and the texture coordinate list are updated to obtain the first mesh.

Optionally, the decoding the sixth bitstream to obtain mesh information corresponding to the sixth bitstream includes:

decoding the seventh sub-bitstream to obtain a connectivity corresponding to the second mesh;

decoding the eighth sub-bitstream to obtain geometry information corresponding to the second mesh; and

decoding the ninth sub-bitstream to obtain attribute information corresponding to the second mesh.

As mentioned above, the mesh information includes a connectivity, geometry information, and attribute information. The sixth bitstream includes a seventh sub-bitstream corresponding to the connectivity, an eighth sub-bitstream corresponding to the geometry information and a ninth sub-bitstream corresponding to the attribute information.

The seventh sub-bitstream is decoded to obtain the connectivity corresponding to the second mesh; the eighth sub-bitstream is decoded to obtain the geometry information corresponding to the second mesh; and the ninth sub-bitstream is decoded to obtain the attribute information corresponding to the second mesh.

Optionally, the decoding the seventh sub-bitstream to obtain a connectivity corresponding to the second mesh includes:

decoding the seventh sub-bitstream to obtain a target character string; and

decoding the target character string and reconstructing the connectivity corresponding to the second mesh.

It should be understood that the target character string is used to indicate the connectivity corresponding to the second mesh.

The decoder side decodes the seventh sub-bitstream using a decoding manner corresponding to the encoding manner of the connectivity on the encoder side, so as to obtain the target character string, which is not repeated here.

Optionally, the decoding the eighth sub-bitstream to obtain geometry information corresponding to the second mesh includes:

performing entropy decoding on the eighth sub-bitstream to obtain a geometric prediction residual corresponding to each vertex in the second mesh;

for each vertex, obtaining predicted geometry coordinates corresponding to each vertex by performing geometric prediction decoding; and

based on the geometric prediction residual corresponding to each vertex and the predicted geometry coordinates, obtaining real geometry coordinates corresponding to the vertex.

It should be understood that the real geometry coordinates corresponding to each vertex above are used to represent geometry information corresponding to the second mesh.

The decoder side decodes the eighth sub-bitstream using a decoding manner corresponding to the encoding manner of the geometry information on the encoder side, so as to obtain the geometry information of the second mesh, which is not repeated here.

Optionally, the decoding the ninth sub-bitstream to obtain attribute information corresponding to the second mesh includes:

demultiplexing the ninth sub-bitstream to obtain the third target sub-bitstream and the fourth target sub-bitstream; based on attribute prediction residual corresponding to each vertex in the second mesh, obtaining real texture coordinates corresponding to the vertex; where the attribute prediction residual corresponding to each vertex is determined by decoding the third target sub-bitstream; and

decoding the fourth target sub-bitstream to obtain a texture map of the second mesh.

In this embodiment, the attribute information includes texture coordinates and a texture map, and the ninth sub-bitstream includes a third target sub-bitstream corresponding to the texture coordinates and a fourth target sub-bitstream corresponding to the texture map.

In this embodiment, the third target sub-bitstream is decoded to determine the attribute prediction residual corresponding to each vertex, and then the real texture coordinates corresponding to each vertex are obtained based on the attribute prediction residual corresponding to each vertex.

The fourth target sub-bitstream is decoded to obtain the texture map of the second mesh.

In one possible case, the ninth sub-bitstream does not include the fourth target sub-bitstream, that is, the attribute information does not include the texture map. In this case, the attribute information corresponding to the second mesh can be obtained only by decoding the third target sub-bitstream.

Optionally, the obtaining real texture coordinates corresponding to each vertex based on an attribute prediction residual corresponding to the vertex in the second mesh includes.

performing entropy decoding on the third target sub-bitstream to obtain the attribute prediction residual corresponding to each vertex in the second mesh;

performing attribute prediction decoding on the vertex to obtain predicted texture coordinates corresponding to the vertex; and

based on the attribute prediction residual corresponding to the vertex and the predicted texture coordinates, obtaining real texture coordinates corresponding to the vertex.

In this embodiment, the decoder side decodes the third target sub-bitstream using a decoding manner corresponding to the encoding manner of the texture information on the encoder side, and obtains the real texture coordinates corresponding to each vertex, which is not repeated here.

Optionally, the performing lossless decoding on a target bitstream to obtain a first mesh includes:

demultiplexing, on the decoder side, the target bitstream to obtain a sixth bitstream, a seventh bitstream, and an eighth bitstream;

decoding, on the decoder side, the sixth bitstream to obtain a connectivity corresponding to the first mesh;

decoding, on the decoder side, the seventh bitstream to obtain geometry information corresponding to the first mesh;

decoding, on the decoder side, the eighth bitstream to obtain attribute information corresponding to the first mesh; and

generating, on the decoder side, a first mesh based on the connectivity, the geometry information, and the attribute information.

In this embodiment, in a case that the first mesh is a three-dimensional mesh including a manifold structure, the target bitstream can be directly demultiplexed to obtain the sixth bitstream, the seventh bitstream, and the eighth bitstream, and the sixth bitstream, the seventh bitstream, and the eighth bitstream can be decoded to obtain the connectivity, the geometry information and the attribute information that are corresponding to the first mesh, respectively, and the first mesh can be generated through reconstruction based on the connectivity, the geometry information, and the attribute information.

For the lossless encoding method provided in this embodiment of this application, the execution subject may be a lossless encoding apparatus. In the embodiments of this application, the lossless encoding apparatus provided in the embodiments of this application is described by using the encoding method being executed by the lossless encoding apparatus as an example.

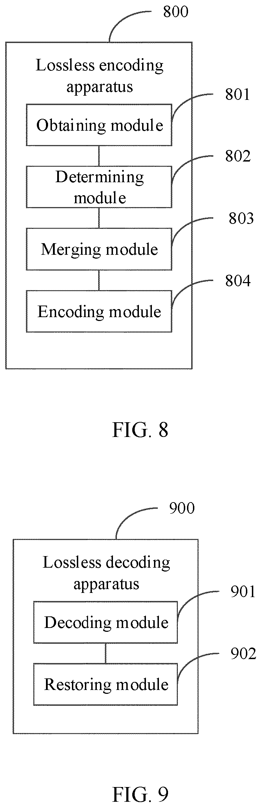

As shown in FIG. 8, an embodiment of this application further provides a lossless encoding apparatus 800, including:

an obtaining module 801, configured to traverse a target mesh and obtain geometry coordinates of each vertex in the target mesh;

a determining module 802, configured to determine vertices with same geometry coordinates as duplicate vertices;

a merging module 803, configured to merge the duplicate vertices in the target mesh to obtain a first mesh; and

an encoding module 804, configured to perform lossless encoding on the first mesh to generate a target bitstream.

Optionally, the merging module 803 is specifically configured to:

in a case that geometry coordinates of each vertex in the target mesh are in one-to-one correspondence to texture coordinates, merge the duplicate vertices with the same geometry coordinates in the target mesh into one vertex without changing the texture coordinates of the duplicate vertices to obtain the first mesh.

Optionally, the merging module 803 is further specifically configured to:

merge the duplicate vertices with the same geometry coordinates in the target mesh into one vertex to obtain the first mesh; and

encode a first identifier corresponding to each vertex in the first mesh to generate an identifier bitstream, where the first identifier indicates the number of duplicates of the corresponding vertex.

Optionally, the encoding module 804 is specifically configured to:

split the first mesh into a second mesh in a case that the first mesh is a three-dimensional mesh including a non-manifold structure;

encode mesh information corresponding to the second mesh and vertex information of a first vertex separately to obtain a first bitstream corresponding to the mesh information and a second bitstream corresponding to the vertex information of the first vertex; and

generate a target bitstream based on the first bitstream and the second bitstream.

Optionally, the encoding module 804 is specifically configured to:

split a non-manifold structure indicated by a second identifier in the first mesh to obtain the second mesh; where

Optionally, the encoding module 802 is specifically configured to:

generate a target identifier based on the non-manifold structure included in the first mesh;

perform entropy encoding on an index corresponding to the first vertex to obtain a first sub-bitstream; and

generate the second bitstream based on the target identifier and the first sub-bitstream.

Optionally, the encoding module 802 is further specifically configured to:

generate a target identifier based on the non-manifold structure included in the first mesh;

perform entropy encoding on a flag bit corresponding to each vertex in the second mesh to obtain a second sub-bitstream; and

generate the second bitstream according to the target identifier and the second sub-bitstream.

Optionally, the encoding module 802 is further specifically configured to:

encode a connectivity corresponding to the second mesh to generate the third sub-bitstream;

encode geometry information corresponding to the second mesh to generate the fourth sub-bitstream; and

encode attribute information corresponding to the second mesh to generate the fifth sub-bitstream.

Optionally, the encoding module 802 is further specifically configured to:

in a case that the first mesh is a three-dimensional mesh including a manifold structure, encode a connectivity corresponding to the first mesh to generate a third bitstream;

encode, for the encoder side, geometry information corresponding to the first mesh to generate a fourth bitstream;

encode, for the encoder side, attribute information corresponding to the first mesh to generate a fifth bitstream; and

generate, for the encoder side, the target bitstream based on the third bitstream, the fourth bitstream, and the fifth bitstream.

In this embodiment of this application, the target mesh is traversed to obtain the geometry coordinates of each vertex in the target mesh; the vertices with the same geometry coordinates are determined as duplicate vertices; and the duplicate vertices in the target mesh are merged to obtain the first mesh. In this way, each duplicate vertex is no longer encoded many times in the subsequent lossless encoding process of the first mesh, thus improving the encoding efficiency.

The apparatus embodiment corresponds to the foregoing lossless encoding method embodiment shown in FIG. 1, and the implementation processes and implementations on the encoder side of the foregoing method embodiments can be applied to the apparatus embodiments, with the same technical effects achieved.

For the lossless decoding method provided in the embodiments of this application, the execution subject can be a lossless decoding apparatus. In the embodiments of this application, the lossless decoding apparatus provided in the embodiments of this application is described by using the lossless decoding method being executed by the lossless decoding apparatus as an example.

As shown in FIG. 9, an embodiment of this application further provides a lossless decoding apparatus 900, including:

a decoding module 901, configured to perform lossless decoding on a target bitstream to obtain a first mesh; and
a restoring module 902, configured to restore duplicate vertices in the first mesh to obtain a target mesh; where

Optionally, the restoring module 902 is specifically configured to:

traverse the first mesh in a case that attribute information of the first mesh is decoded, and determine geometry vertices corresponding to multiple texture coordinate vertices as target vertices; and
create duplicate vertices with same geometry coordinates as the target vertex, and update a connectivity corresponding to the first mesh based on a connectivity corresponding to texture coordinates of the duplicate vertices to obtain the target mesh.

Optionally, the restoring module 902 is further specifically configured to:

decode the identifier bitstream to obtain a first identifier corresponding to each vertex in the first mesh; and
create duplicate vertices based on the first identifier corresponding to each vertex, to obtain the target mesh.

Optionally, the decoding module 901 is specifically configured to:

demultiplex the target bitstream to obtain a sixth bitstream and a seventh bitstream;
decode the sixth bitstream and the seventh bitstream to obtain mesh information corresponding to the sixth bitstream and vertex information of second vertices corresponding to the seventh bitstream, respectively;
reconstructing a second mesh based on the mesh information; and
merge second vertices in the second mesh based on vertex information of the second vertices, to obtain a first mesh.

Optionally, the decoding module 901 is further specifically configured to:
decoding the sixth sub-bitstream to obtain the vertex information of the second vertices, in a case that the target identifier indicates that the first mesh is a three-dimensional mesh including a non-manifold structure.

Optionally, the decoding module 901 is specifically configured to:

parse the vertex information of the second vertices and determine the second vertices in the second mesh;
query geometry coordinates of the second vertex in a mapping table to obtain a target vertex;
update an index corresponding to the second vertex to an index corresponding to the target vertex; and
update a connectivity corresponding to the second mesh based on the index corresponding to each vertex in the second mesh to obtain the first mesh.

Optionally, the third bitstream includes a seventh sub-bitstream, an eighth sub-bitstream, and a ninth sub-bitstream.

The decoding module 901 is further specifically configured to:

decode the seventh sub-bitstream to obtain a connectivity corresponding to the second mesh;
decoding the eighth sub-bitstream to obtain geometry information corresponding to the second mesh; and
decode the ninth sub-bitstream to obtain attribute information corresponding to the second mesh.

Optionally, the decoding module 901 is further specifically configured to:

demultiplex the target bitstream to obtain a sixth bitstream, a seventh bitstream, and an eighth bitstream;
decode the sixth bitstream to obtain a connectivity corresponding to the first mesh;
decode the seventh bitstream to obtain geometry information corresponding to the first mesh;
decode the eighth bitstream to obtain attribute information corresponding to the first mesh; and
generate a first mesh based on the connectivity, the geometry information, and the attribute information.

The lossless encoding apparatus and the lossless decoding apparatus in the embodiments of this application may be an electronic device, such as an electronic device with an operating system, or a component in the electronic device, such as an integrated circuit or a chip. The electronic device may be a terminal or other devices than the terminal. For example, the terminal may include, but is not limited to, the types of the terminal listed above, and other devices may be a server, a network attached storage (Network Attached Storage, NAS), and the like. This is not limited in the embodiments of this application.

The lossless decoding apparatus provided in this embodiment of this application is capable of implementing the processes implemented in the method embodiments in FIG. 7, with the same technical effects achieved. To avoid repetition, details are not described herein again.

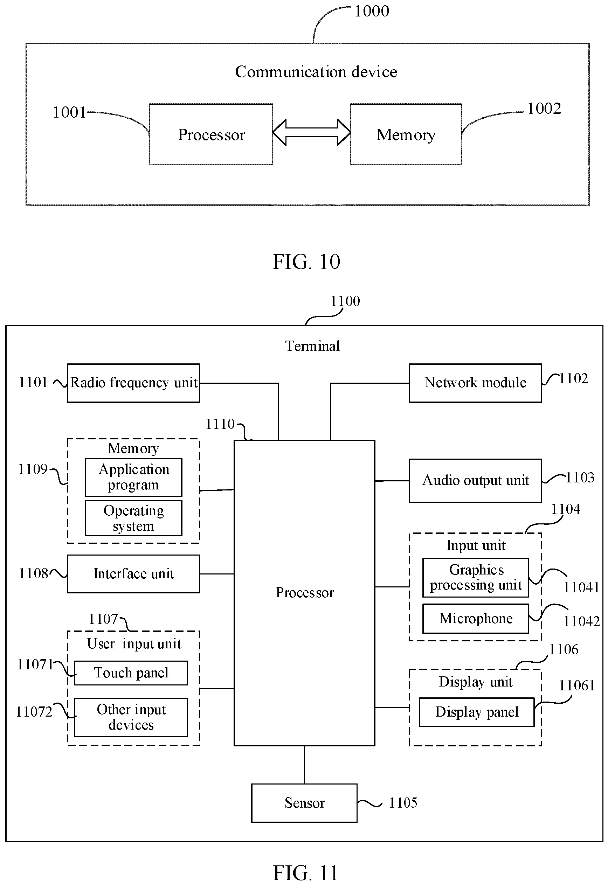

Optionally, as shown in FIG. 10, an embodiment of this application further provides a communication device 1000, including a processor 1001 and a memory 1002, and the memory 1002 stores a program or instructions capable of running on the processor 1001. For example, when the communication device 1000 is a terminal, the program or the instructions are executed by the processor 1001 to implement the steps of the foregoing lossless encoding method embodiments, with the same technical effects achieved, or to implement the steps of the foregoing lossless decoding method embodiments, with the same technical effects achieved.

An embodiment of this application further provides a terminal, including a processor 1001 and a communication interface, where the processor 1001 is configured to perform the following operations:

traversing a target mesh to obtain geometry coordinates of each vertex in the target mesh;
determining vertices with same geometry coordinates as duplicate vertices;
merging the duplicate vertices in the target mesh to obtain a first mesh; and
performing lossless encoding on the first mesh to generate a target bitstream.

Alternatively, the processor 1001 is configured to perform the following operations:

performing lossless decoding on a target bitstream to obtain a first mesh; and
restoring duplicate vertices in the first mesh to obtain a target mesh.

The terminal embodiment corresponds to the foregoing terminal side method embodiment, and the implementation processes and implementations of the foregoing method embodiments can be applied to the terminal embodiments, with the same technical effects achieved. Specifically, FIG. 11 is a schematic diagram of a hardware structure of a terminal implementing an embodiment of this application.

The terminal 1100 includes but is not limited to components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

A person skilled in the art can understand that the terminal 1100 may further include a power supply (such as a battery) for supplying power to the components. The power supply may be logically connected to the processor 1110 through a power management system. In this way, functions such as charge management, discharge management, and power consumption management are implemented by using the power management system. The terminal structure shown in FIG. 11 does not constitute a limitation to the terminal. The terminal may include more or fewer components than those shown in the figure, or some components may be combined, or there may be a different component arrangement, which is not repeated herein.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include the display panel 11061. The display panel 11061 may be configured in a form of a liquid crystal display, an organic light-emitting diode, or the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to at least one of a physical keyboard, a functional button (such as a volume control button or a power on/off button), a trackball, a mouse, and a joystick. Details are not described herein.

In this embodiment of this application, after receiving downlink data from a network-side device, the radio frequency unit 1101 sends the downlink data to the processor 1110 for processing; and the radio frequency unit 1101 also sends uplink data to the network-side device. Generally, the radio frequency unit 1101 includes, but is not limited to, an antenna, an amplifier, a transceiver, a coupler, a low noise amplifier, a duplexer, and the like.

The memory 1109 may be configured to store software programs or instructions and various data. The memory 1109 may mainly include a first storage area for storing programs or instructions and a second storage area for storing data, where the first storage area may store an operating system, an application program or instructions required by at least one function (for example, an audio playing function and an image playing function), and the like. In addition, the memory 1109 may be a volatile memory or a non-volatile memory, or the memory 1109 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1109 described in this embodiment this application includes but is not limited to these and any other suitable types of memories.

The processor 1110 may include one or more processing units. Optionally, the processor 1110 integrates an application processor and a modem processor. The application processor mainly processes operations related to an operating system, a user interface, an application program, and the like. The modem processor mainly processes wireless communication signals, for example, a baseband processor. It should be understood that alternatively, the modem processor may not be integrated into the processor 1110.

The processor 1110 is configured to perform the following operations:

traversing a target mesh to obtain geometry coordinates of each vertex in the target mesh;
determining vertices with same geometry coordinates as duplicate vertices;
merging the duplicate vertices in the target mesh to obtain a first mesh; and
performing lossless encoding on the first mesh to generate a target bitstream.

Alternatively, the processor 1110 is configured to perform the following operations:

performing lossless decoding on a target bitstream to obtain a first mesh; and
restoring duplicate vertices in the first mesh to obtain a target mesh.

An embodiment of this application further provides a readable storage medium, where the readable storage medium stores a program or instructions, and when the program or the instructions are executed by a processor, the processes of the foregoing embodiments of the lossless encoding method or the processes of the foregoing embodiments of the lossless decoding method are implemented, with the same technical effects achieved. To avoid repetition, details are not described herein again.

The processor is a processor in the terminal described in the foregoing embodiments. The readable storage medium includes a computer-readable storage medium, for example, a computer read only memory ROM, a random access memory RAM, a magnetic disk, or an optical disc.

An embodiment of this application further provides a chip, where the chip includes a processor and a communication interface. The communication interface is coupled to the processor, and the processor is configured to run a program or instructions to implement the processes of the foregoing embodiments of the lossless encoding method or the processes of the foregoing embodiments of the lossless decoding method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the lossless encoding method or the processes of the foregoing embodiments of the lossless decoding method, with the same technical effects achieved. To avoid repetition, details are not repeated herein.

An embodiment of this application further provides a system, where the system includes an encoder side and a decoder side, the encoder side executes all the processes of the embodiment of the lossless encoding method, and the encoder side executes all the processes of the embodiment of the lossless decoding method, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

According to the description of the foregoing implementations, persons skilled in the art can clearly understand that the method in the foregoing embodiments may be implemented by software in combination with a necessary general hardware platform. Specifically, the method in the foregoing embodiments may alternatively be implemented by hardware. However, in many cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

### Claims

1. A lossless encoding method, comprising:

   traversing, by an encoder side, a target mesh and obtaining geometry coordinates of each vertex in the target mesh;
   determining, by the encoder side, vertices with same geometry coordinates as duplicate vertices;
   merging, by the encoder side, the duplicate vertices in the target mesh to obtain a first mesh; and
   performing, by the encoder side, lossless encoding on the first mesh to generate a target bitstream.

2. The method according to claim 1, wherein the merging the duplicate vertices in the target mesh to obtain a first mesh comprises:
   in a case that geometry coordinates of each vertex in the target mesh are in one-to-one correspondence to texture coordinates, merging, by the encoder side, the duplicate vertices with the same geometry coordinates in the target mesh into one vertex without changing the texture coordinates of the duplicate vertices to obtain the first mesh.

3. The method according to claim 1, wherein the merging the duplicate vertices in the target mesh to obtain a first mesh comprises:

   merging, by the encoder side, the duplicate vertices with the same geometry coordinates in the target mesh into one vertex to obtain the first mesh; and
   encoding, by the encoder side, a first identifier corresponding to each vertex in the first mesh to generate an identifier bitstream, wherein the first identifier indicates the number of duplicates of the corresponding vertex.

4. The method according to claim 1, wherein the performing lossless encoding on the first mesh to generate the target bitstream comprises:

splitting, by the encoder side, the first mesh into a second mesh in a case that the first mesh is a three-dimensional mesh comprising a non-manifold structure; wherein the second mesh is a three-dimensional mesh comprising a manifold structure;

encoding, by the encoder side, mesh information corresponding to the second mesh and vertex information of a first vertex separately to obtain a first bitstream corresponding to the mesh information and a second bitstream corresponding to the vertex information of the first vertex, wherein the first vertex is a newly added vertex of the second mesh relative to the first mesh; and

generating, by the encoder side, a target bitstream based on the first bitstream and the second bitstream.

5. The method according to claim 4, wherein the splitting the first mesh into a second mesh comprises:

splitting, by the encoder side, a non-manifold structure indicated by a second identifier in the first mesh to obtain the second mesh; wherein

the second identifier is used to indicate whether a non-manifold structure is generated by merging the duplicate vertices in the first mesh.

6. The method according to claim 4, wherein the encoding vertex information of a first vertex to obtain a second bitstream corresponding to the vertex information of the first vertex comprises:

generating, by the encoder side, a target identifier based on the non-manifold structure comprised in the first mesh;

performing, by the encoder side, entropy encoding on an index corresponding to the first vertex to obtain a first sub-bitstream; and

generating, by the encoder side, the second bitstream based on the target identifier and the first sub-bitstream.

7. The method according to claim 4, wherein the encoding vertex information of a first vertex to obtain a second bitstream corresponding to the vertex information of the first vertex comprises:

generating, by the encoder side, a target identifier based on the non-manifold structure comprised in the first mesh;

performing, by the encoder side, entropy encoding on a flag bit corresponding to each vertex in the second mesh to obtain a second sub-bitstream; wherein the flag bit is used to indicate whether a corresponding vertex is the first vertex; and

generating, by the encoder side, the second bitstream based on the target identifier and the second sub-bitstream.

8. The method according to claim 4, wherein the first bitstream comprises a third sub-bitstream, a fourth sub-bitstream, and a fifth sub-bitstream, and the mesh information comprises a connectivity, geometry information, and attribute information; and

the encoding mesh information corresponding to the second mesh to obtain a first bitstream corresponding to the mesh information comprises:

encoding, by the encoder side, a connectivity corresponding to the second mesh to generate the third sub-bitstream;

encoding, by the encoder side, geometry information corresponding to the second mesh to generate the fourth sub-bitstream; and

encoding, by the encoder side, attribute information corresponding to the second mesh to generate the fifth sub-bitstream.

9. The method according to claim 1, wherein the performing lossless encoding on the first mesh to generate the target bitstream comprises:

in a case that the first mesh is a three-dimensional mesh comprising a manifold structure, encoding, by the encoder side, a connectivity corresponding to the first mesh to generate a third bitstream;

encoding, by the encoder side, geometry information corresponding to the first mesh to generate a fourth bitstream;

encoding, by the encoder side, attribute information corresponding to the first mesh to generate a fifth bitstream; and

generating, by the encoder side, the target bitstream based on the third bitstream, the fourth bitstream, and the fifth bitstream.

10. A lossless decoding method, comprising:

performing, by a decoder side, lossless decoding on a target bitstream to obtain a first mesh; and
restoring, by the decoder side, duplicate vertices in the first mesh to obtain a target mesh; wherein
the duplicate vertices are vertices with same corresponding geometry coordinates in the target mesh.

11. The method according to claim 10, wherein the restoring duplicate vertices in the first mesh to obtain a target mesh comprises:

traversing, by the decoder side, the first mesh in a case that attribute information of the first mesh is decoded, and determining geometry vertices corresponding to multiple texture coordinate vertices as target vertices; and
creating, by the decoder side, duplicate vertices with same geometry coordinates as the target vertex, and updating a connectivity corresponding to the first mesh based on a connectivity corresponding to texture coordinates of the duplicate vertices to obtain the target mesh.

12. The method according to claim 10, wherein the target bitstream comprises an identifier bitstream, and the restoring duplicate vertices in the first mesh to obtain a target mesh comprises:

decoding, by the decoder side, the identifier bitstream to obtain a first identifier corresponding to each vertex in the first mesh; wherein the first identifier indicates the number of duplicates of a corresponding vertex; and
creating, by the decoder side, duplicate vertices based on the first identifier corresponding to each vertex, to obtain the target mesh.

13. The method according to claim 10, wherein the performing lossless decoding on a target bitstream to obtain a first mesh comprises:

demultiplexing, by the decoder side, the target bitstream to obtain a sixth bitstream and a seventh bitstream;
decoding, by the decoder side, the sixth bitstream and the seventh bitstream to obtain mesh information corresponding to the sixth bitstream and vertex information of second vertices corresponding to the seventh bitstream, respectively;
reconstructing, by the decoder side, a second mesh based on the mesh information; and
merging, by the decoder side, second vertices in the second mesh based on vertex information of the second vertices, to obtain a first mesh; wherein
the first mesh is a three-dimensional mesh comprising a non-manifold structure, the second mesh is a three-dimensional mesh comprising a manifold structure, and the second vertex is obtained by splitting the first mesh into the second mesh.

14. The method according to claim 13, wherein the seventh bitstream comprises a target identifier and a sixth sub-bitstream; and
the decoding, by the decoder side, the seventh bitstream to obtain vertex information of second vertices corresponding to the seventh bitstream comprises:
decoding, by the decoder side, the sixth sub-bitstream to obtain the vertex information of the second vertices, in a case that the target identifier indicates that the first mesh is a three-dimensional mesh comprising a non-manifold structure.

15. The method according to claim 13, wherein the merging second vertices in the second mesh based on vertex information of the second vertices, to obtain a first mesh comprises:

parsing, by the decoder side, the vertex information of the second vertices and determining the second vertices in the second mesh;
querying, by the decoder side, geometry coordinates of the second vertex in a mapping table to obtain a target vertex; wherein the mapping table is obtained by decoding the sixth bitstream and the seventh bitstream, the mapping table stores a mapping relationship between geometry coordinates corresponding to each vertex and an index corresponding to each vertex, and geometry coordinates corresponding to the target vertex are the same as geometry coordinates corresponding to the second vertex;
updating, by the decoder side, an index corresponding to the second vertex to an index corresponding to the target vertex; and

updating, by the decoder side, a connectivity corresponding to the second mesh based on the index corresponding to each vertex in the second mesh to obtain the first mesh.

16. The method according to claim 13, wherein the sixth bitstream comprises a seventh sub-bitstream, an eighth sub-bitstream, and a ninth sub-bitstream, and the mesh information comprises a connectivity, geometry information, and attribute information; and

the decoding the sixth bitstream to obtain mesh information corresponding to the sixth bitstream comprises:

decoding, by the decoder side, the seventh sub-bitstream to obtain a connectivity corresponding to the second mesh;

decoding, by the decoder side, the eighth sub-bitstream to obtain geometry information corresponding to the second mesh; and

decoding, by the decoder side, the ninth sub-bitstream to obtain attribute information corresponding to the second mesh.

17. The method according to claim 10, wherein the performing lossless decoding on a target bitstream to obtain a first mesh comprises:

demultiplexing, by the decoder side, the target bitstream to obtain a sixth bitstream, a seventh bitstream, and an eighth bitstream;

decoding, by the decoder side, the sixth bitstream to obtain a connectivity corresponding to the first mesh;

decoding, by the decoder side, the seventh bitstream to obtain geometry information corresponding to the first mesh;

decoding, by the decoder side, the eighth bitstream to obtain attribute information corresponding to the first mesh; and

generating, by the decoder side, a first mesh based on the connectivity, the geometry information, and the attribute information, wherein the first mesh is a three-dimensional mesh comprising a manifold structure.

18. A lossless encoding apparatus, comprising:

an obtaining module, configured to traverse a target mesh and obtain geometry coordinates of each vertex in the target mesh;

a determining module, configured to determine vertices with same geometry coordinates as duplicate vertices;

a merging module, configured to merge the duplicate vertices in the target mesh to obtain a first mesh; and

an encoding module, configured to perform lossless encoding on the first mesh to generate a target bitstream.

19. A lossless decoding apparatus comprising:

a decoding module, configured to perform lossless decoding on a target bitstream to obtain a first mesh; and

a restoring module, configured to restore duplicate vertices in the first mesh to obtain a target mesh; wherein the duplicate vertices are vertices with same corresponding geometry coordinates in the target mesh.

20. A terminal, comprising a processor and a memory, wherein the memory stores a program or instructions capable of running on the processor, and when the program or the instructions are executed by the processor, the steps of the lossless encoding method according to any one of claims 1 to 9 or the steps of the lossless decoding method according to any one of claims 10 to 17 are implemented.

21. A readable storage medium, wherein the readable storage medium stores a program or instructions, and when the program or the instructions are executed by a processor, the steps of the lossless encoding method according to any one of claims 1 to 9 or the steps of the lossless decoding method according to any one of claims 10 to 17 are implemented.

22. A system, wherein the system comprises an encoder side and a decoder side, wherein the encoder side performs the steps of the lossless encoding method according to any one of claims 1 to 9, and the decoder side performs the steps of the lossless decoding method according to any one of claims 10 to 17.

Traverse a target mesh to obtain geometry coordinates of each vertex in the target mesh — S101

Determine vertices with same geometry coordinates as duplicate vertices — S102

Merge the duplicate vertices in the target mesh to obtain a first mesh — S103

Perform lossless encoding on the first mesh to generate a target bitstream — S104

FIG. 1

FIG. 2

FIG. 3

FIG. 4

FIG. 5

FIG. 6

| Perform lossless decoding on a target bitstream to obtain a first mesh | S701 |

| Restore duplicate vertices in the first mesh to obtain a target mesh | S702 |

FIG. 7

800

Lossless encoding
apparatus

801

Obtaining module

802

Determining
module

803

Merging module

804

Encoding module

FIG. 8

900

Lossless decoding
apparatus

901

Decoding module

902

Restoring module

FIG. 9

1000

Communication device

1001

Processor ⟺ Memory

1002

FIG. 10

1100

Terminal

1101 Radio frequency unit

Network module 1102

1110

Memory

1109

Application program

Operating system

Processor

Audio output unit 1103

1104

Input unit

Graphics processing unit 11041

Microphone 11042

1108 Interface unit

1107

User input unit

11071 Touch panel

11072 Other input devices

1106

Display unit 11061

Display panel

Sensor 1105

FIG. 11

<table>
<tr><td colspan="2" align="center">**INTERNATIONAL SEARCH REPORT**</td><td>International application No.<br>**PCT/CN2023/102104**</td></tr>
</table>

| A. | CLASSIFICATION OF SUBJECT MATTER |
|---|---|

G06T17/20(2006.01)i；G06T9/00(2006.01)i

According to International Patent Classification (IPC) or to both national classification and IPC

| B. | FIELDS SEARCHED |
|---|---|

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; Elservier; IEEE: 网格, 顶点, 编码, 解码, 重复, 合并, 纹理, mesh, vertex, encoding, decoding, merge, texture

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 104243958 A (LENOVO (BEIJING) CO., LTD.) 24 December 2014 (2014-12-24) description, paragraphs [0028]-[0082], and figures 2-8 | 1-3, 9-12, 17-22 |
| A | CN 104243958 A (LENOVO (BEIJING) CO., LTD.) 24 December 2014 (2014-12-24) description, paragraphs [0028]-[0082], and figures 2-8 | 4-8, 13-16 |
| X | CN 101826126 A (ZHEJIANG UNIVERSITY) 08 September 2010 (2010-09-08) description, paragraphs [0076]-[0079] | 1-3, 9-12, 17-22 |
| A | CN 101826126 A (ZHEJIANG UNIVERSITY) 08 September 2010 (2010-09-08) description, paragraphs [0076]-[0079] | 4-8, 13-16 |
| X | 张浩 等 (ZHANG, Jie et al.). "应用哈密顿回路的三角网格拓扑压缩 (Connectivity Compression of Triangle Meshes Based on Hamiltonian Cycle)" 计算机辅助设计与图形学学报 (Journal of Computer-Aided Design & Computer Graphics), 31 May 2013 (2013-05-31), pp. 697-707 | 1-3, 9-12, 17-22 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2023/102104** |

**C. DOCUMENTS CONSIDERED TO BE RELEVANT**

| Category* | Citation of document, with indication, where appropriate, of the relevant passages | Relevant to claim No. |
|---|---|---|
| A | 张洁 等 (ZHANG, Jie et al.). "应用哈密顿回路的三角网格拓扑压缩 (Connectivity Compression of Triangle Meshes Based on Hamiltonian Cycle)" 计算机辅助设计与图形学学报 (Journal of Computer-Aided Design & Computer Graphics), 31 May 2013 (2013-05-31), pp. 697-707 | 4-8, 13-16 |
| A | CN 108335367 A (HANGZHOU QUNHE INFORMATION TECHNOLOGIES CO., LTD.) 27 July 2018 (2018-07-27) entire document | 1-22 |
| A | CN 114373041 A (JUHAOKAN TECHNOLOGY CO., LTD.) 19 April 2022 (2022-04-19) entire document | 1-22 |
| A | US 2018253867 A1 (CANON K. K.) 06 September 2018 (2018-09-06) entire document | 1-22 |

Form PCT/ISA/210 (second sheet) (July 2022)

**INTERNATIONAL SEARCH REPORT**
**Information on patent family members**

International application No.

**PCT/CN2023/102104**

| Patent document cited in search report | | | Publication date (day/month/year) | Patent family member(s) | | | Publication date (day/month/year) |
|---|---|---|---|---|---|---|---|
| CN | 104243958 | A | 24 December 2014 | CN | 104243958 | B | 05 October 2016 |
| CN | 101826126 | A | 08 September 2010 | None | | | |
| CN | 108335367 | A | 27 July 2018 | CN | 108335367 | B | 28 September 2021 |
| CN | 114373041 | A | 19 April 2022 | None | | | |
| US | 2018253867 | A1 | 06 September 2018 | GB | 201703556 | D0 | 19 April 2017 |
| | | | | GB | 2560319 | A | 12 September 2018 |
| | | | | GB | 2560319 | B | 02 September 2020 |
| | | | | US | 10552987 | B2 | 04 February 2020 |

Form PCT/ISA/210 (patent family annex) (July 2022)

**EP 4 546 272 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210772455X